# EUROPEAN PATENT APPLICATION

(11) **EP 2 890 219 A1**
(43) Date of publication of application: **01.07.2015**
(21) Application number: 13830494.4
(22) Date of filing: 20.08.2013
(51) Int. Cl.: H05B 6/72, H05B 6/64, H05B 6/74, H05B 6/78, A21B 1/48, A21B 2/00

(54) **MICROWAVE HEATING DEVICE AND FIRING FACILITY**

(30) Priority: 22.08.2012 JP 2012183643
(71) Applicant: Otsuka Pharmaceutical Co., Limited, Tokyo 101-8535 (JP)
(72) Inventor: YOSHIDA, Masashi, Takamatsu-shi, Kagawa 761-0192 (JP); KAKIIWA, Hajime, Osaka-shi, Osaka 540-0021 (JP)
(74) Representative: Hoffmann Eitle
(86) International application number: PCT/JP2013/072135
(87) International publication number: WO 2014/030625

(57) **Abstract**

This invention relates to a microwave heating device that enables use of a conveyor with a metallic belt, and to a baking facility having the microwave heating device.

The microwave heating device comprises a conveying means 10 for conveying objects m to be heated; a microwave generating means 5 for emitting microwaves to the objects m to be heated conveyed by the conveying means 10; a rotating member 20 that is provided between the objects m to be heated and the microwave generating means 5, and that has a rotary vane 22 configured to reflect the microwaves emitted from the microwave generating means 5; and a shielding member 15 configured to reflect the microwaves, provided between the rotating member 20 and the objects m to be heated, the conveying means 10 having a metallic holding member for holding the objects m to be heated, the shielding member 15 having a microwave transmitting unit for transmitting the microwaves, the microwave transmitting unit extending in a direction orthogonal to the conveyance direction of the objects m to be heated conveyed by the conveying means 10.

## Description

### Technical Field

The present invention relates to a microwave heating device and a baking facility. More specifically, the present invention relates to a microwave heating device for dielectrically heating a conveyed substance by irradiating the substance with microwaves; and a baking facility comprising the microwave heating device.

### Background Art

In hitherto-known facilities for manufacturing baked articles, such as food or earthenware, attempts have been made to improve production efficiency by baking raw materials while conveying them on a conveyor.

For example, Patent Document 1 discloses a baking apparatus for producing a thin baked article, the apparatus comprising a drum oven and a steel band oven.

In the device disclosed in Patent Document 1, the drum oven serves to preheat confectionery dough applied on the drum surface. The drum oven comprises a cylindrical drum that rotates at a predetermined speed, and a heater for heating the drum. The steel band oven serves to bake the confectionery dough placed on the band of a caterpillar-tracked conveyor while conveying the dough by the conveyor. The steel band oven comprises a hood having a plurality of gas burners therein, and a caterpillar-tracked conveyor with a thin steel band. The band of the caterpillar-tracked conveyor is configured to pass through the inside of the hood. The device of Patent Document 1 further comprises a conveying unit that is provided between the drum oven and the steel band oven. The conveying unit peels off the preheated confectionery dough from the drum surface, and transfers the preheated dough onto the caterpillar-tracked conveyor.

In this structure, the confectionery dough applied on the surface of the drum is half-baked (the moisture content is reduced) due to the heat from the drum. Additionally, the temperature of the dough is increased to some extent. The half-baked confectionery dough is removed from the surface of the drum by the conveying unit, and is transferred onto the band of the caterpillar-tracked conveyor. Then, the confectionery dough placed on the band of the caterpillar-tracked conveyor is passed through inside the hood by the conveyor, and is thereby baked by the heat of the gas burners in the hood.

Therefore, in the baking apparatus of Patent Document 1, in the drum oven, the drum corresponds to the conveying means for conveying the dough, and, in the steel band oven, the belt conveyor corresponds to the conveying means. As such, the structure of the conveying means differs in the drum oven and the steel band oven, and a common conveying means for the drum oven and the steel band oven cannot be used. Consequently, the baking apparatus of Patent Document 1 requires a conveying unit for transferring the confectionery dough in addition to the drum oven and the steel band oven, and thereby suffers an unwanted increase in apparatus size.

Further, upon baking of moisture-containing dough, a preheating process, such as the one disclosed in Patent Document 1, is necessary so as to make the product quality uniform and ensure sufficient baking. Since this preheating requires more energy than general baking, a drum oven using gas burners to heat the drum, such as the drum oven of Patent Document 1, has a problematic increase in energy consumption for the preheating.

As a technique for reducing the moisture of a water-containing substance or increasing the temperature of a substance using a small amount of energy, a method of heating a moisture-containing substance with microwaves is disclosed (e.g., Patent Documents 2 to 4). For example, Patent Document 2 discloses an example of microwave heating for reducing the moisture of tea leaves, and Patent Document 3 discloses an example of microwave heating for heating unvulcanized rubber. Further, Patent Documents 4 to 6 disclose an example of microwave heating for heating and drying wood, ceramic molded products, dewatered sludge, and the like. Additionally, Patent Documents 7 to 10 disclose an example of microwave heating for thawing and heating frozen foods to a predetermined/specified temperature before the food is cooked at a high temperature.

In the baking apparatus of Patent Document 1, it may be possible to reduce the energy amount consumed by the preheating by using a microwave heating device instead of the drum oven. Further, a microwave heating device may be provided with a conveyor that passes through a space to which the microwaves are applied. Accordingly, by also using such a conveyor as a conveyor for the steel band oven, it becomes possible to convey the substance preheated with microwaves directly into the hood of the steel band oven, without using a conveying unit. This may be conducive to a decrease in device size.

### Citation List

### Patent Documents

Patent Document 1: JP2004-8117A
Patent Document 2: JPS64-6883A
Patent Document 3: JPH02-98411A
Patent Document 4: JP2001-347505A
Patent Document 5: JP2003-106773A
Patent Document 6: JP2012-81426A
Patent Document 7: JPH11-74071A
Patent Document 8: JPH11-345684A
Patent Document 9: JPH11-354268A
Patent Document 10: JP2000-306661A

### Summary of Invention

### Technical Problem

Since the steel band oven is configured to bake a substance, the inside of the hood is kept at a high temperature, namely, at 100°C or higher, using a gas burner or the like. Therefore, a metal belt resistant to a high temperature is used for the conveyor of the steel band oven. In contrast, in a microwave heating device, a resin belt, rather than a metallic belt, is used as the belt of the conveyor for conveying a substance. If a metallic belt is used in a microwave heating device, microwaves will be reflected by the surface of the metallic belt; consequently, the electric field in the metal surface theoretically becomes 0, and the metal surface, i.e., the portion of the substance in contact with the metal belt surface, cannot be heated. Further, if the microwaves are reflected by the belt surface, microwave irradiation varies depending on the type of substance. This causes non-uniform heating of the substance, thereby failing to uniformly preheat the substance. This non-uniform preheating of the substance further causes non-uniform baking of the ultimately obtained baked product.

To avoid the above problem, although the baking apparatus in Patent Document 1 adopts microwave preheating, the conveyor belt for conveying substances in the microwave heating device must be made of a resin. However, since a resin belt cannot be used in a steel band oven, it is not possible to use a common conveyor for the preheating device and the steel band oven. Therefore, although the baking apparatus in Patent Document 1 performs microwave preheating, a conveying unit is required so as to transfer the substance preheated by microwave onto the conveyor of the steel band oven. More specifically, even for a baking apparatus that performs microwave preheating, a decrease in the size of the apparatus is difficult, since it is not possible to provide a common conveyor for the preheating device and the baking apparatus.

Until now, no device has achieved heating a substance with microwaves while conveying the substance by a metallic belt conveyor. As mentioned above, if a metallic conveyor for conveying a substance can be used in a microwave heating device, a decrease in the size of the baking apparatus may be possible. Therefore, there is a demand for a microwave heating device with a metallic conveyor.

In view of the above circumstances, an object of the present invention is to provide a microwave heating device having a conveyor with a metallic belt, and a baking facility having the microwave heating device.

### Solution to Problem

The microwave heating device of the first invention comprises a conveying means for conveying objects to be heated; a microwave generating means for emitting microwaves to the objects to be heated conveyed by the conveying means; a rotating member that is provided between the objects to be heated and the microwave generating means, and that has a rotary vane configured to reflect the microwaves emitted from the microwave generating means; and a shielding member configured to reflect the microwaves, provided between the rotating member and the objects to be heated, the conveying means having a metallic holding member for holding the objects to be heated, the shielding member having a microwave transmitting unit for transmitting the microwaves, and the microwave transmitting unit extending in a direction orthogonal to the conveyance direction of the objects to be heated conveyed by the conveying means.

The microwave heating device of the second invention is characterized in that, based on the first invention, the shielding member covers the conveying means in the entire region thereof irradiated with the microwaves.

The microwave heating device of the third invention is characterized in that, based on the first or second invention, the microwave transmitting unit of the shielding member is in the form of slits penetrating through the shielding member, and a width of each slit in the conveyance direction of the objects to be heated conveyed by the conveying means is 1/4 of the wavelength of the microwaves.

The microwave heating device of the fourth invention is characterized in that, based on the first invention, the second invention, or the third invention, the conveying means is a belt conveyor having a metallic belt for conveying the objects to be heated by placing the objects on the upper surface thereof.

The microwave heating device of the fifth invention is characterized in that, based on the first invention, the second invention, the third invention, or the fourth invention, the microwave heating device further comprises a cover case for covering the conveying means in a portion thereof in which the objects to be heated is being conveyed, the microwave generating means is configured to supply microwaves to the inside of the cover case, the shielding member is provided inside the cover case between the microwave generating means and the conveying means, the cover case has a fluid flow path therein for supplying a liquid flow, the fluid flow path resides in the opposite side of the microwave generating means in relation to the shielding member, and the fluid flow path is provided between the objects to be heated conveyed by the conveying means and an inner surface of the cover case, along the travelling direction of the objects to be heated conveyed by the conveying means.

The microwave heating device of the sixth invention is characterized in that, based on the first invention, the second invention, the third invention, the fourth invention, or the fifth invention, the fluid flow path is formed from a material that absorbs or transmits the microwaves.

The baking facility of the seventh invention is a baking facility for baking an objects to be baked after preheating the objects, the baking facility comprising a conveying means for conveying the objects to be baked; a preheating device for preheating the objects to be baked, provided in a conveyance path for conveying, by the conveying means, the objects to be baked, and a baking device for baking the objects to be baked that is preheated by the preheating device, provided in a conveyance path for conveying, by the conveying means, the objects to be baked, the conveying means having a metallic holding member for holding the objects to be baked, and the preheating device is the microwave heating device according to any one of the first to sixth inventions.

The baking facility of the eighth invention is characterized in that, based on the seventh invention, the conveying means is a belt conveyor having a metallic belt for conveying the objects to be baked by placing the objects on the upper surface thereof.

### Advantageous Effects of Invention

The first invention enables dielectric heating of objects to be heated by irradiating the objects to be heated with microwaves emitted from the microwave generating means. Further, since the microwave heating device comprises the rotating member and the shielding member, it is possible to uniformly heat the objects to be heated even when the holding member is made of metal. Further, by having a metal holding member, after the objects to be heated is preheated by the microwave heating device, it is possible to supply the objects to be heated to a device that carries out a treatment at a higher temperature than that used in the microwave heating device, while keeping the objects to be heated held in the holding member. More specifically, it is possible to use a common conveying means for the microwave heating device and the device in the subsequent step, enabling the microwave heating device to be more easily used for various manufacturing lines. Further, by using such a common conveying means, a decrease in the size of the manufacturing line using a microwave heating device becomes possible.

The second invention in which the shielding member covers the conveying means in the entire region thereof subjected to irradiation with microwaves enables further improvement in the effect of uniformly heating the objects to be heated.

The third invention enables further improvement in the effect of uniformly heating the objects to be heated.

The fourth invention, in which a belt conveyor is used as the conveying means, enables stable conveyance of the objects to be heated. Moreover, since the structure of the conveying means can be simplified, the structure of the entire device can also be simplified. Further, since the belt conveyor has a metallic belt, the belt conveyor can be used as a common conveying means for the microwave heating device and another device that requires, as a conveying means, a belt conveyor having a metallic belt.

The fifth invention, in which microwaves reflected by the inner surface of the cover case are absorbed by a liquid, prevents the objects to be heated from being overheated at or near the inner surface of the cover case. Therefore, it is possible to further improve the effect of uniformly heating the objects to be heated.

The sixth invention enables microwaves to be more easily absorbed by a liquid compared with a structure in which the fluid flow path is formed of a member that reflects microwaves, thereby further improving the effect of uniformly heating the objects to be heated.

The seventh invention, which has a microwave preheating device for preheating the objects to be baked, enables a reduction in the energy required to preheat the objects to be baked. Further, since this invention uses the preheating device of the present invention as the preheating device, it is possible to use a common conveying means for the preheating device and the baking device, thereby enabling the facility to be decreased in size.

The eighth invention, in which a belt conveyor is used as the conveying means, enables stable conveyance of the objects to be baked. Moreover, since the structure of the conveying means can be simplified, the structure of the entire baking facility can also be simplified.

### Brief Description of Drawings

Fig. 1 is a schematic cross-sectional view of the microwave heating device 1 according to the present embodiment.

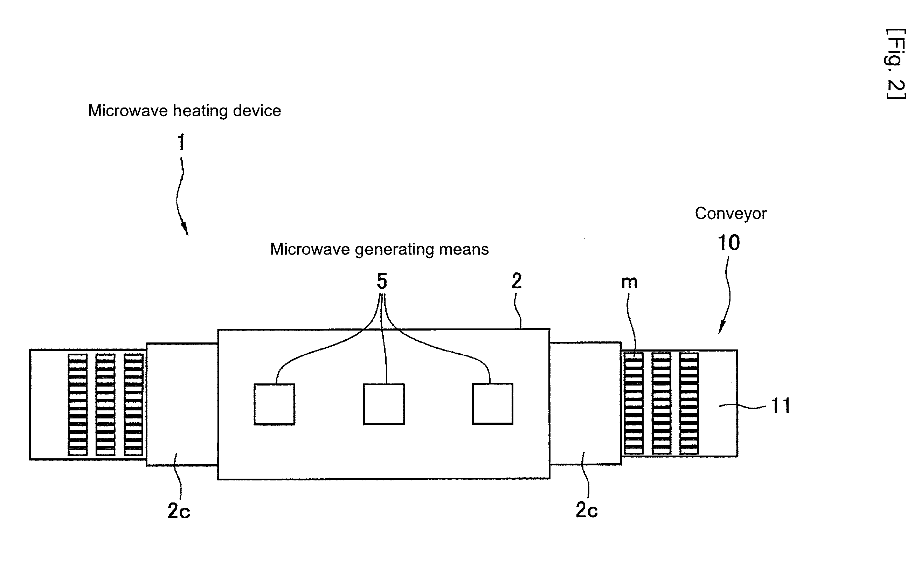

Fig. 2 is a schematic plan view of the microwave heating device 1 according to the present embodiment.
Fig. 3 is a cross-sectional view, taken along the line III-III in Fig. 1.

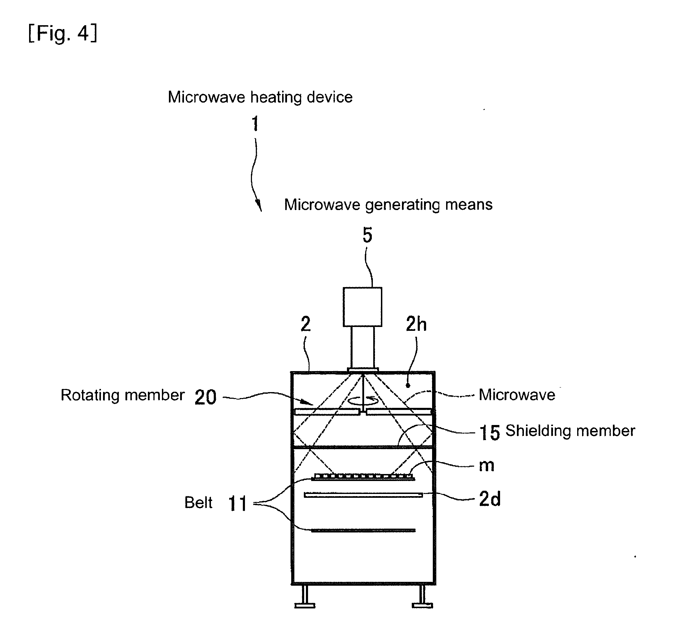

Fig. 4 is a cross-sectional view, taken along the line IV-IV in Fig. 1.
Fig. 5 is a schematic explanatory view of the microwave heating device 1 having a duct 31, with its main part enlarged.
Fig. 6 is a drawing showing the results of the experiment of Example 1. Figs. 6 (A) and 6(B) show the results of the experiments of Comparative Examples 1 and 2, and Fig. 6(C) shows the results of the experiment of the present Example.
Fig. 7 is a drawing showing a layout of a microwave generating means.
Fig. 8 is a drawing showing the results of the experiment of Example 2.
Fig. 9 is a drawing showing the results of the experiment of Example 3.

### Description of Embodiments

An embodiment of the present invention is explained below by referring to the drawings. The microwave heating device of the present invention is a device for irradiating the objects to be heated with microwaves, thereby dielectrically heating the objects. The microwave heating device of the present invention is characterized in that the device is capable of uniformly heating the objects to be heated, even when a metallic member is used as the conveying means for conveying the objects to be heated.

The objects to be heated by the microwave heating device of the present invention is not particularly limited, insofar as it can be dielectrically heated by applying microwaves. Examples of the objects to be heated include dough of baked confectioneries, foods such as retort pouch food, clays to be baked to make earthenware, raw wood, and rubber.

Further, the purpose for heating these objects with the microwave heating device of the present invention is also not particularly limited. For example, by heating the aforementioned dough of baked confectioneries or the clays with the microwave heating device of the present invention, it is possible to reduce the moisture content of the dough or the clay, and also preheat the dough or the clay so as to increase its temperature. Further, drying of raw wood or initial heating (softening) of rubber for easy molding can also be performed by using the microwave heating device of the present invention. Further, heat-sterilization of foods such as retort pouch food may be performed by heating the food with the microwave heating device of the present invention. Furthermore, by heating frozen food with the microwave heating device of the present invention, the frozen food can be thawed and warmed up to a certain temperature.

Hereunder, an example of using the microwave heating device of the present invention as a device for preheating dough (object to be heated) of a baked confectionery is explained.

### ▪ Microwave heating device 1 of the present embodiment

Firstly, a schematic structure of the microwave heating device 1 of the present embodiment is explained below.

### ▪ Cover case 2

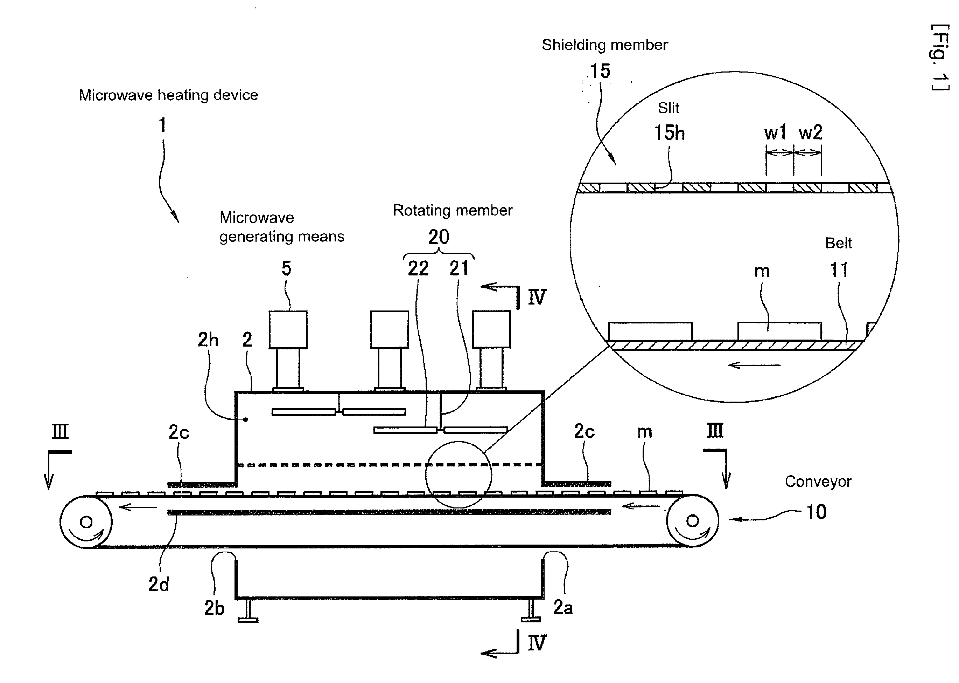

In Fig. 1, the reference numeral 2 denotes the cover case of the microwave heating device 1 of the present embodiment. The cover case 2 is hollow, and has a space 2h therein. The space 2h of the cover case 2 serves as a heating chamber in which objects m to be heated are heated by being irradiated with microwaves.

The cover case 2 is structured to prevent external transmission of microwaves from the space 2h. More specifically, the cover case 2 has a wall made of a material that reflects microwaves (for example, a nonmagnetic metal material such as nonmagnetic stainless-steel, aluminum, or copper. With this wall, the cover case 2 is capable of preventing transmission of microwaves to the outside of the cover case 2. Further, in the cover case 2, a shielding member 15 and a rotating member 20 are provided between the later-described conveying means 10 and the microwave generating means 5. The reason for this configuration is described later.

### ▪ Microwave generating means 5

As shown in Fig. 1, a plurality of microwave generating means 5 is provided above the cover case 2. The microwave generating means 5 are configured such that microwaves emitted from a microwave emission outlet are radiated to the inside of the cover case 2. More specifically, each microwave generating means 5 is provided with a microwave emission outlet facing downward. With this configuration, when the microwave generating means 5 emit microwaves from the microwave emission outlets, the microwaves radiate downward in the cover case 2.

The microwave generating means 5 are not particularly limited, insofar as they are capable of generating microwaves of a suitable wavelength for the objects to be heated. Examples include a magnetron microwave generator, and a semiconductor microwave generator. The frequency of the microwaves generated from the microwave generating means 5 is not particularly limited, insofar as it enables microwave heating. The frequency is generally 300 MHz to 30 GHz. The microwave heating device 1 of the present embodiment preferably emits microwaves having a frequency of 2.45 GHz±50 MHz.

### ▪ Conveyor 10

As shown in Fig. 1, openings 2a and 2b are provided on the lateral sides of the cover case 2 for enabling communication between the inside and outside of the cover case 2. A conveyor 10, which serves as a conveying means, penetrates through the space 2h via the openings 2a and 2b. The conveyor 10 conveys the objects m to be heated, loads the objects m to be heated into the space 2h via the opening 2a, and unloads the objects m from the space 2h via the opening 2b.

The conveyor 10 is a belt conveyor having a circular belt 11. The belt 11 is formed of a metal plate made of, for example, a nonmagnetic metal material such as nonmagnetic stainless steel, aluminum, or copper. The material of the belt 11 is not limited to these nonmagnetic metal materials, and also includes magnetic materials such as iron or magnetic stainless steel, and resin materials.

With the above structure, the microwave heating device 1 of the present embodiment enables loading of the objects m to be heated into the cover case 2 by placing the objects m to be heated on the belt 11 of the conveyor 10. Further, since the microwave heating device 1 irradiates the objects m to be heated with microwaves while moving the objects m inside the cover case 2 by the conveyor 10, it is possible to continuously heat a plurality of objects m.

Further, by providing the aforementioned conveyor 10 having the metal plate belt 11 in the microwave heating device 1 of the present embodiment as the conveying means, it is possible to more easily use the conveyor 10 as a common conveyor for the microwave heating device 1 and the device used in the subsequent step.

For example, in a method of first preheating the objects m (preheating step), and then baking the objects m in the atmosphere of 100°C or higher (baking step), it is necessary to use a conveyor having a belt that is durable in the baking atmosphere. More specifically, when the objects m are baked by the heat of a gas burner, it is necessary to use a conveyor having a belt that is durable in the heat of a gas burner. Accordingly, if the device for the preheating step and the device for the baking step use a common conveyor, the device for the preheating step will have a conveyor having a belt that is durable in the baking atmosphere.

If the conveyor 10 of the microwave heating device 1 of the present embodiment has the belt 11 made of a metal plate, it is possible to use the conveyor 10 in the baking step. Therefore, by using such a microwave heating device 1 of the present embodiment as a preheating device in the baking facility, it becomes possible to omit, for example, a device for transferring the objects m to be heated from the preheating device to the baking device.

Therefore, by using the microwave heating device 1 of the present embodiment as a preheating device in the baking facility in which the objects m are first preheated and then baked, it is possible to use a common conveyor in the facility, thereby decreasing the size of the facility. Further, compared with the structure in which a preheating device other than the microwave heating device 1 is used, it is possible to reduce the energy consumed for the preheating. More specifically, by using the microwave heating device 1 of the present embodiment having the conveyor 10 with the belt 11 made of a metal plate as the preheating device in the baking facility in which the objects m are first preheated and then baked, it is possible to decrease the size of the baking facility, and reduce the facility's energy consumption.

### ▪ Shielding member 15 and rotating member 20

If the belt 11 of the conveyor 10 is made of a metal plate such as a stainless-steel plate, the heating of the objects m by the microwave heating device 1 may not be appropriately performed. For example, when a plurality of objects m is placed on the belt 11, the heating condition varies depending on the position. This may result in a great temperature variation among the plurality of objects m after the heating. However, as described above, since the rotating member 20 and the shielding member 15 of the microwave heating device 1 of the present embodiment are provided inside of the cover case 2, the objects m can be appropriately heated by the microwave heating device 1, even when the conveyor 10 has the belt 11 made of a metal plate. The shielding member 15 and the rotating member 20 are explained below.

### ▪ Shielding member 15

As shown in Fig. 1, inside the cover case 2, the shielding member 15 is provided between the upper surface of the cover case 2 and the upper surface of the belt 11 of the conveyor 10. The shielding member 15 is a tabular member, and is disposed substantially in parallel with the upper surface of the belt 11 of the conveyor 10.

The shielding member 15 is made of a material that does not transmit microwaves (e.g., metal), and has slits 15h that penetrate from the front surface to the rear surface of the shielding member 15. Thus, when the microwave generating means 5 emit microwaves, the shielding member 15 allows only the microwaves transmitted through the slits 15h to be applied on the objects m to be heated placed on the belt 11 of the conveyor 10.

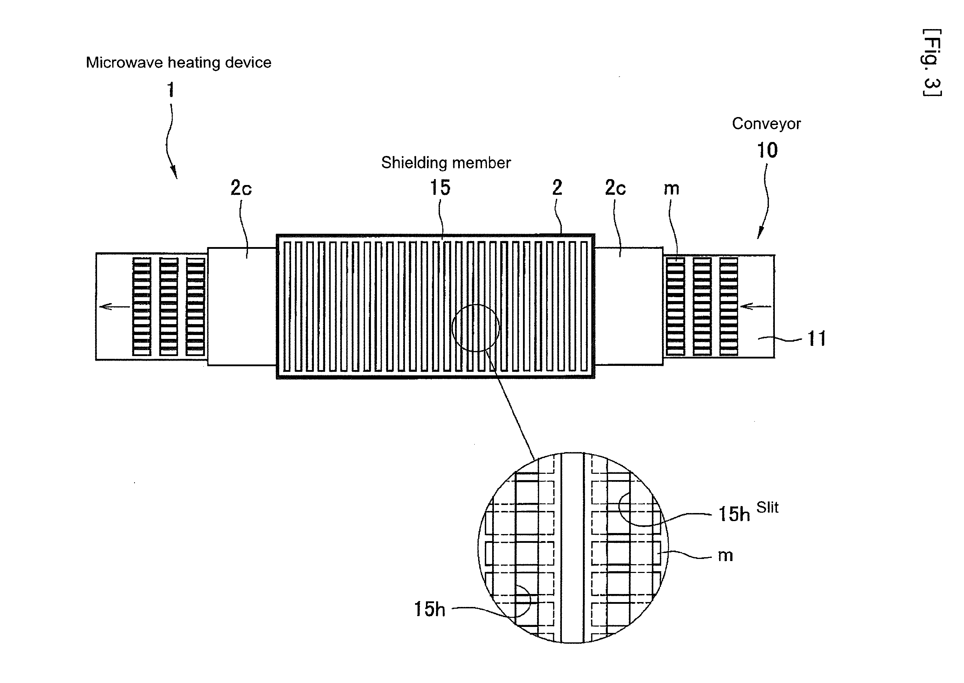

Further, the slits 15h of the shielding member 15 are arranged such that their axis-wise directions are substantially in parallel with the width-wise direction of the shielding member 15 (in Fig. 3, the width runs up to down). In other words, the slits 15h are arranged such that their axis-wise directions are substantially orthogonal to the conveyance direction (in Fig. 3, the conveyance path runs right to left) of the objects m to be heated that are conveyed by the conveyor 10.

Further, each slit 15h has a width w1 (see Fig. 1) that is 1/4 of the wavelength of the microwaves emitted from the microwave generating means 5. For example, when microwaves of 2.45 GHz are emitted, their wavelength is 12 cm; thus, the width w1 of the slit 15h is 3 cm. By thus specifying the width w1, it is possible to further increase the effect of uniformly heating the objects m with the microwaves transmitted through the slits 15h.

Although the width w1 of the slits 15h is preferably 1/4 of the wavelength of the microwaves, the width w1 may be slightly smaller or greater than 1/4 (within several %), or may be about 1/6 to 1/3 of the wavelength of the microwaves. It is possible to provide the slits 15h as through holes that simply penetrate from the front surface to the rear surface (nothing is formed inside of each slit 15h), or attach a material that transmits microwaves, such as Teflon (registered trademark), to each slit 15h.

Further, the interval between the slits 15h, in other words, the width w2 (see Fig. 1) of each frame of the shielding member 15 between the slits 15h, is not particularly limited. However, the width w2 is also preferably 1/4 of the wavelength of the microwaves emitted from the microwave generating means 5. By thus specifying the width w2, it is possible to further increase the effect of uniformly heating the objects m with the microwaves transmitted through the slits 15h.

Further, it is not indispensably necessary to arrange the axis-wise direction of the slits 15h to be orthogonal to the conveyance direction of the objects m to be heated insofar as the axis-wise direction is not parallel with the conveyance direction of the objects m to be heated; however, the axis-wise direction of the slits 15h is preferably arranged to be orthogonal to the conveyance direction of the objects m to be heated. This is because, presumably, by arranging the axis-wise direction of the slits 15h to be orthogonal to the conveyance direction of the objects m to be heated, the objects m can be intermittently irradiated with microwaves, thereby reducing non-uniform heating. In view of this, it is sufficient insofar as the axis-wise direction of the slits 15h is not parallel with the conveyance direction of the objects m to be heated. More specifically, the angle of the axes of the slits 15h is preferably not less than 75°, and more preferably close to 90° with respect to the conveyance direction of the objects m to be heated. Particularly preferably, the angle is 90° (orthogonal).

Further, the axis-wise length of each slit 15h is not particularly limited, and may be about the same as the width of the cover case 2. It is also possible to provide a plurality of slits 15h with an axis-wise length smaller than the width of the cover case 2.

Further, the shielding member 15 is not necessarily substantially parallel with the upper surface of the belt 11 of the conveyor 10. The shielding member 15 may be inclined with respect to the upper surface of the belt 11 of the conveyor 10 in the travelling direction (horizontal direction in Fig. 1) or in the widthwise direction (vertical to the plane of Fig. 1). However, in view of uniformly heating the objects to be heated, the shielding member 15 is preferably arranged in parallel with the upper surface of the belt 11 of the conveyor 10.

Further, the shielding member 15 may not be a tabular member, insofar as it is provided with a microwave transmitting unit (such as through holes enabling transmission of microwaves emitted from the microwave generating means 5 onto the belt 11 of the conveyor 10, such as the slits 15h).

Further, in the above example, the space 2h in the cover case 2 is completely divided into two parts by the shielding member 15. With this structure, only the microwaves that passed through the slits 15h are irradiated onto the objects m to be heated placed on the belt 11 of the conveyor 10. In other words, in the above example, the belt 11 of the conveyor 10 in the cover case 2 is completely covered with the shielding member 15. However, the belt 11 of the conveyor 10 in the cover case 2 may not be completely covered with the shielding member 15. For example, a small gap may be formed between each edge of the shielding member 15 and the inner surface of the cover case 2 when the shielding member 15 is provided in the cover case 2, thereby enabling the microwaves to be transmitted through the gaps. Further, the shielding member 15 may be formed of a plurality of plate-shaped materials by providing small gaps therebetween, thereby enabling the microwaves to be transmitted through the gaps.

### ▪ Rotating member 20

As shown in Fig. 1, rotating members 20 are provided between the upper surface of the cover case 2 and the shielding member 15. Each rotating member 20 has a rotation axis 21, and a plurality of rotary vanes 22 attached to the end of the rotation axis 21.

As shown in Fig. 1, the rotation axis 21 of the rotating member 20 has a base end attached to the upper surface of the cover case 2 while being rotatable about its central axis. The rotation axis 21 is configured to rotate about the central axis by a driving means (not shown) such as a motor.

As shown in Fig. 1, the rotating member 20 has a plurality of rotary vanes 22. Each rotary vane 22 is formed of a material that reflects microwaves emitted from the microwave generating means 5. For example, each rotary vane 22 is formed of a nonmagnetic metal plate made of a nonmagnetic stainless-steel aluminum, copper, or the like. Further, each of the plurality of rotary vanes 22 is attached to the rotation axis 21 while being inclined with respect to the plane orthogonal to the central axis of the rotation axis 21. For example, by making the central axis of the rotation axis 21 of the rotating member 20 vertical, the surfaces of the plurality of rotary vanes 22 are inclined with respect to the horizontal plane.

By providing the rotating member 20 having the above structure, the microwaves emitted from the microwave generating means 5 hit the surface of each rotary vane 22, are reflected by the surface of the rotary vane 22, and are scattered. Therefore, by rotating the rotating member 20 about its central axis, the state of reflection of the microwaves by the surface of the rotary vane 22 is changed by the rotation of the rotating member 20. With this effect, it is possible to smooth the spatial bias in the intensity distribution of the microwaves emitted from the microwave generating means 5. Therefore, by providing the rotating member 20 and rotating the rotary vanes 22, it is possible to uniformize the microwaves emitted to the objects m to be heated on the belt 11 of the conveyor 10 through the slits 15h of the shielding member 15.

The number of the rotary vanes 22 of the rotating member 20 is not particularly limited. For example, the rotating member 20 may have 2, 1, or 3 or more rotary vanes. The size of each rotary vane 22 is not particularly limited; however, the rotary vane 22 preferably has the greatest size possible. Further, the inclination of the surface of the rotary vane 22 is not particularly limited; however, the inclination is preferably about 10 to 30° with respect to the plane orthogonal to the central axis of the rotation axis 21. By setting the inclination within this range, it is possible to enlarge the region in which the microwaves reflected by the surface of the rotary vane 22 diffuse.

For example, when the distance between the inner surfaces of the cover case 2 (i.e., the width of the space 2h) is 952 mm, two rotary vanes 22 each having a length of 280 mm and a width of 100 mm are provided to be rotationally symmetric (at 180° from each other) with respect to the rotation axis 21; then, the rotary vanes 22 are disposed such that each surface is inclined at about 15° with respect to the upper surface of the belt 11 of the conveyor 10, and the central axis of the rotation axis 21 resides in the width-wise center of the cover case 2 while being orthogonal to the upper surface of the belt 11 of the conveyor 10. With this structure, the uniform irradiation of the objects m to be heated with microwaves can be more efficiently performed.

Further, when a plurality of rotary vanes 22 is provided, the rotary vanes 22 may have variable sizes. The degree of the inclination of the surface with respect to the horizontal plane may also vary among the plurality of rotary vanes 22. For example, it is possible to provide different sizes of multiple rotary vanes 22, or provide multiple rotary vanes 22 with different inclinations.

Further, the number of the rotating members 20 in the cover case 2 is also not particularly limited. An appropriate number of rotating members 20 may be provided depending on the size of the cover case 2, the number of the microwave generating means 5, the layout of the microwave generating means 5, and the like.

Further, the positions of the plurality of rotating members 20 are also not particularly limited. For example, the rotating members 20 may align along the central line of the width of the cover case 2, or may parallelly align in a single line or in plural lines in a portion deviated from the central line. The rotating members 20 may also be arranged zigzag. In particular, the rotating member 20 is preferably arranged so that the rotary vanes 22 are overlapped with the microwave emission outlet of the microwave generating means 5. More specifically, the rotating member 20 is preferably disposed such that when the rotating member 20 is vertically viewed from the bottom, the rotary vanes 22 rotate while traversing the microwave emission outlet of the microwave generating means 5. With this structure, it is possible to rotate the rotary vanes 22 in a portion where the microwaves are emitted, thereby more effectively diffusing the microwaves in the cover case 2.

The height of the rotary vane 22 of the rotating member 20 is also not particularly limited; however, by setting the height of the rotary vane 22 to be closer to the shielding member 15, it is possible to improve the uniformity in heating of the objects m. Since the shielding member 15 divides the cover case 2 into two parts, by setting the height of the rotary vane 22 to be closer to the shielding member 15, it is possible to improve the efficiency of diffusion and uniform radiation of the microwaves into the lower portion of the cover case where the objects m are placed. Further, when a plurality of rotating members 20 is provided, they may have the same height, or different heights. When a plurality of rotating members 20 with different heights is provided, the rotary vanes 22 of the upper rotating member 20 and the rotary vanes 22 of the lower rotating member 20 are preferably vertically overlapped. This structure enables more effective diffusion of microwaves, compared with a structure in which these rotary vanes 22 are not overlapped.

### ▪ Fluid flow path

Further, in terms of improving the effect of uniform microwave irradiation of the objects m to be heated, a fluid flow path for supplying a microwave-absorbing liquid, such as water, is preferably provided in the cover case 2.

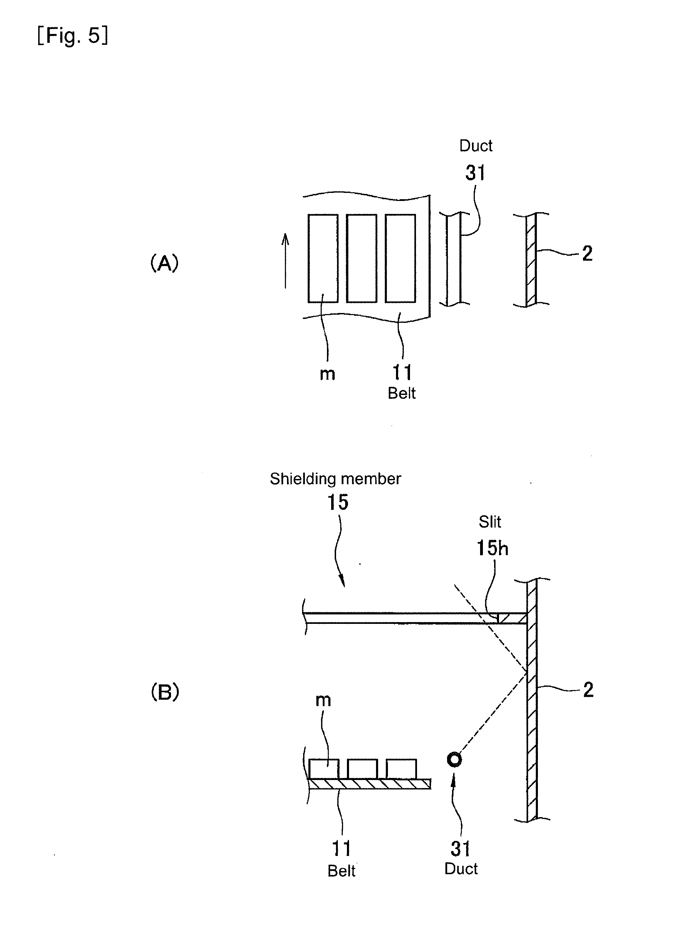

Fig. 5 shows a specific example. As shown in Fig. 5, a duct 31 is provided in a portion of the cover case 2 in the vicinity of the inner surface in the width-wise direction of the cover case 2, which is positioned in the opposite side of the microwave generating means 5 in relation to the shielding member 15. Although Fig. 5 shows only one of the inner surfaces in the width-wise direction of the cover case 2, the duct 31 is provided in each of the inner surfaces in the width-wise direction of the cover case 2. More specifically, a pair of ducts 31 is provided so that the objects m to be heated on the belt 11 of the conveyor 10 are placed between each duct 31 in a plan view. In other words, the ducts 31 are provided so that each duct 31 is positioned between the objects m to be heated and the inner surface in the width-wise direction of the cover case 2 in a plan view.

By supplying a flow of liquid, such as water, in each duct 31 arranged as above, it is possible to make the liquid in each duct 31 absorb the microwaves that are emitted from the microwave generating means 5 and reflected by the inner surface in the width-wise direction of the cover case 2.

Among the objects m to be heated on the belt 11 of the conveyor 10, the objects m near the inner surfaces in the width-wise direction of the cover case 2 are easily irradiated with the microwaves reflected by the inner surfaces in the width-wise direction of the cover case 2. Therefore, depending on the shape of the inner surfaces in the width-wise direction of the cover case 2 or the positioning of the objects m to be heated on the belt 11, the objects m to be heated near the inner surfaces in the width-wise direction of the cover case 2, in other words, the objects m to be heated near the ends (the objects m at the ends) in the width-wise direction of the belt 11 of the conveyor 10 may be irradiated with a greater amount of microwaves than the objects m to be heated at the central portion (objects m in the central portion) in the width-wise direction of the belt 11. More specifically, the objects m at the ends may be excessively irradiated with microwaves, compared with the objects m at the central portion. Consequently, the temperature of the objects m at the ends becomes higher than the temperature of the objects m at the central portion. As such, the heating conditions may vary depending on the position in the width-wise direction of the belt 11.

However, as described above, by providing the ducts 31 and supplying a flow of liquid, such as water, in each duct 31, it is possible to make the liquid in the ducts 31 absorb a portion of the microwaves reflected by the inner surfaces in the width-wise direction of the cover case 2. With this structure, the amount of the microwaves applied on the objects m at the ends can be reduced, compared with the structure without the ducts 31. This is conducive to reduce the unevenness in amount of the microwave radiation between the objects m at the ends and the objects m at the central portion. Thus, it is possible to substantially equalize the amount of the microwaves applied on the objects m to be heated on the belt 11 of the conveyor 10, thereby substantially equalizing the heating condition of the objects m on the belt 11 of the conveyor 10.

The positions of the ducts 31 are not particularly limited, insofar as they reside in the opposite side of the microwave generating means 5 in relation to the shielding member 15, and between the shielding member 15 and the belt 11. For example, each duct 31 may be provided at a portion higher or lower than the upper end of objects m to be heated on the belt 11 of the conveyor 10, or at the same level as those of the upper ends of the objects m to be heated. However, if the height of the upper end of each duct 31 is lower than the upper ends of the objects to be heated, the object tends to be overheated. If the height of the upper end of each duct 31 is higher than the upper ends of the objects to be heated, the heating of the objects is likely to fail. Therefore, the height of the upper end of each duct 31 is preferably at the same height as those of the upper ends of the objects to be heated.

Each duct 31 is preferably arranged such that the axis-wise direction of the duct 31 is in parallel with the travelling direction of the belt 11 and the upper surface of the belt 11. However, the duct 31 is not particularly limited to this structure.

Further, the material of the ducts 31 is not particularly limited insofar as the material absorbs or transmits microwaves. More specifically, the material is not limited insofar as it allows microwaves to be absorbed into the duct 31 itself, or allows microwaves to be transmitted through the duct 31 and absorbed into the liquid in the duct 31. Examples of the material of the ducts 31 include glass and silicon. However, the material is not particularly limited, and is appropriately selected according to the material, characteristics, usage, and the like, of the objects m to be heated.

Further, the method for supplying liquid to each duct 31 is not particularly limited. For example, it is possible to provide a fluid supplying means outside the cover case 2, and supply liquid from the fluid supplying means at a predetermined flow rate. By providing the fluid supplying means, it is possible to prevent excessive increase in temperature of the liquid in the ducts 31. For example, a fluid circulating device having a pump as the power source for supplying a fluid flow and a refrigeration unit for cooling the liquid recovered from the ducts 31 may be used. Further, instead of circulating the liquid, a structure in which liquid is supplied from a water source, such as a tap, to the ducts 31 and is discharged from the ducts 31 may be used.

Further, the diameter of each duct 31 and the flow rate of the liquid supplied to the duct 31 are not particularly limited, and may be appropriately determined according to the power of microwave output, and the shape, material, characteristics, and/or usage of the objects m to be heated.

The ducts 31 correspond to the fluid flow path in the claims. However, the fluid flow path is not limited to the ducts 31 insofar as it is configured to supply a liquid flow for absorbing microwaves. For example, a groove-shaped fluid path with its upper end opened may be provided on the wall of the cover case 2. This structure also allows microwaves to be absorbed into the liquid when the microwaves are emitted from the opened upper end of the groove-shaped fluid path.

### ▪ Conveying means

In the above example, the conveyor 10 having the belt 11 is used as a conveying means. By using the conveyor 10 as a conveying means, the objects m to be heated can be stably conveyed since the objects m to be heated are conveyed on the belt 11. Further, since the conveying means has a simple structure, the structure of the facility may also be advantageously simplified. However, the conveying means are not limited to the conveyor 10 having the belt 11, and a conveying means using a different method for holding and conveying the objects m to be heated may also be used. For example, it is possible to use a conveying means formed by connecting a plurality of plates for holding the objects m to be heated, or a conveying means having a holding instrument that holds the objects m to be heated, for example, by pinching the objects m to be heated. When metallic plates or metallic holding instruments are used in these structures, it is possible to appropriately heat the objects m by using the above structure.

### ▪ Miscellaneous

In the microwave heating device 1 having the above structure, since the cover case 2 has the openings 2a and 2b, there is a possibility of leakage of microwaves to the outside of the device through the openings 2a and 2b. Therefore, each of the openings 2a and 2b of the cover case 2 preferably has a microwave shielding member 2c for preventing the leakage of microwaves. Further, since a gap is provided between the belt 11 of the conveyor 10 and the inner surface in the width-wise direction of the cover case 2, the applied microwaves may be transmitted to a lower portion of the belt 11 of the conveyor 10. Therefore, as shown in Fig. 1, it is preferable to provide a microwave shielding member 2d between the upper belt 11 and the lower belt 11 of the conveyor 10. The microwave shielding member 2d has the same structure as that of the microwave shielding member 2c. This structure prevents the microwaves transmitted between the upper belt 11 and the inner surface in the width-wise direction of the cover case 2 from being applied to the portion below the microwave shielding member 2d.

### Example 1

So as to confirm the effectiveness of the microwave heating device of the present invention, a plurality of objects were heated, and their heating conditions were observed.

In the experiment, the microwave heating device shown in Fig. 1 was used as the microwave heating device of the present Example. The microwave heating device has a rotating member, a shielding member, and a fluid path (duct). In Comparative Examples, a microwave heating device made by removing the rotating member, the shielding member, and the fluid path from the microwave heating device of the present Example was used.

The specifications of the individual units of the microwave heating device of the present Example are as follows.

### (1) Cover case

The internal space of the cover case is 1500 mm in length, and 952 mm in width. The height of the cover case from the belt surface of the later-described conveyor belt is changeable within the range of 300 mm to 500 mm by moving the top panel.

### (2) Microwave generating means

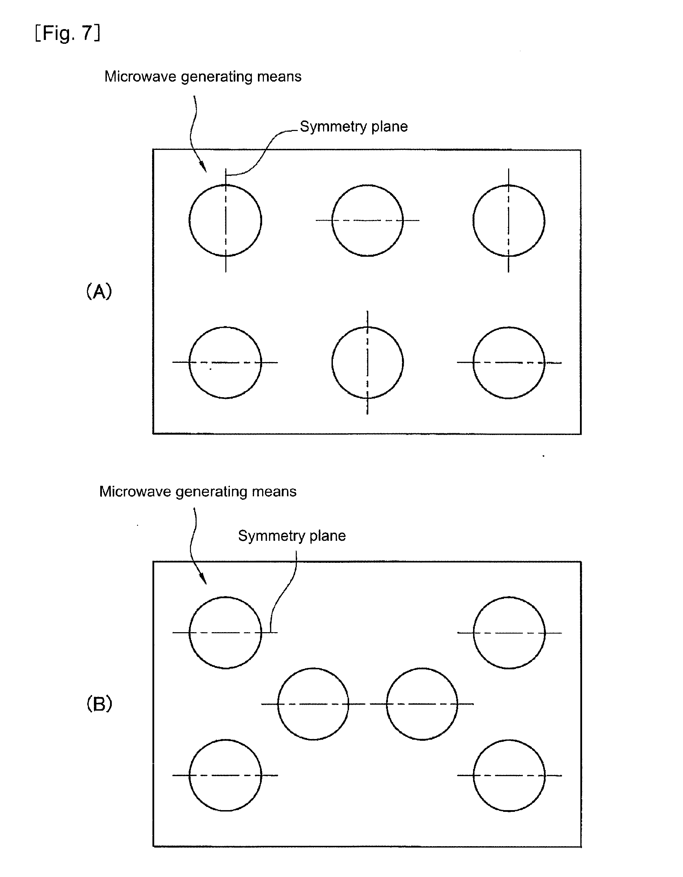

A microwave generator (Hitachi Kyowa Engineering Co., Ltd.; model No.: 2M130) was used as the microwave generating means. The microwave generator emits microwaves in two directions in a manner such that the microwaves are applied substantially plane-symmetric in relation to the plane (symmetry plane) having the central axis of the microwave oscillating outlet (wave guide outlet). In the central axis direction of the microwave oscillating outlet, the area to which the microwaves are emitted is assumed to be about 12° to 74° with respect to the central axis. In the direction orthogonal to the central axis, the area to which the microwaves are emitted is assumed to be about 12°. In the present Example and Comparative Examples 1 and 2, six microwave generators are provided on the upper surface of the cover case. In the present Example and Comparative Example 2, the six microwave generators are arranged as shown in Fig. 7(A). In Comparative Example 1, the six microwave generators are arranged as shown in Fig. 7(B).

### (3) Rotating member

Four rotating members with the same-shaped rotary vanes were provided. The four rotating members are aligned in two lines along the longitudinal direction of the cover case, so that each line has two rotating members. So as to prevent the rotary vanes from interfering with each other, the adjacent rotary vanes are positioned at different heights (see Fig. 1). Each rotating member had a total length, which is a length orthogonal to the rotation axis, of 580 mm, and had plate-shaped rotary vanes each having a length of 280 mm and a width of 100 mm. In the rotary vanes of each rotating member, the rotation axis was vertically disposed, and the upper surface was disposed at about 15° with respect to the horizontal-wise direction. Further, the rotating member having lower rotary vanes (lower rotating member) is provided with a 50 mm distance from the upper surface of the shielding member to the rotary vanes thereof (since the rotary vanes are inclined, the actual gap is about 20 mm). Further, the rotating member having upper rotary vanes is provided so that the distance between the rotary vanes thereof and the rotary vanes of the lower rotating member is 100 mm (the actual distance between the vanes is about 40 mm) .

### (4) Shielding member

The shielding member is made of an aluminum plate, and has a length, which is a length along the longitudinal direction of the cover case (traveling direction of the conveyor), of 1500 mm, and a width of 952 mm. The shielding member is provided at a portion 150 mm distant from the surface of the belt of the conveyor belt serving as the conveying means. In the shielding member, slits, each of which has a width of 30 mm, are formed at intervals of 30 mm along the longitudinal direction of the cover case (traveling direction of the conveyor). Each slit extends along the width-wise direction of the cover case to a portion 50 mm from the end of the shielding member in the width-wise direction of the cover case. Therefore, each slit has a length, which is a length in the axis-wise direction of the shielding member, of 852 mm.

### (5) Fluid flow path

A glass tube (external diameter = 10 mm, internal diameter = about 8 mm) was provided in the vicinity of each of the width-wise inner surfaces of the cover case, as a fluid flow path. The glass tube was structured such that the height of the upper end of the glass tube is the same as those of the upper ends of the objects to be heated (16 mm from the upper surface of the belt). The glass tube was provided along the total length of the longitudinal direction of the cover case.

### (6) Conveying means

A belt conveyor having a nonmagnetic stainless-steel belt was used as the conveying means. This belt conveyor was capable of preventing the belt from being heated by the microwaves, and thereby enables the experiment to be performed without an influence of the heating of the objects to be heated by the heat transmission from the belt. The belt conveyor was arranged with its upper belt surface horizontally disposed. The distance from the upper surface of the belt conveyor to the top panel of the cover case was adjusted to ensure the optimum heating conditions in each experiment. By adjusting the distance from the upper surface of the belt conveyor to the top panel of the cover case to 350 mm to 410 mm, the optimum heating conditions were ensured in each experiment.

The present experiment was performed under the following conditions so as to heat a plurality of objects to be heated to a temperature in a range of 55°C to 60°C.
▪ Output power of microwave generator: gross output power (the total power of six devices) was about 6 Kw
▪ Applied microwave: frequency = 2.455 GHz (wavelength = about 12 cm)
▪ Rotation rate of rotating member: 88 rpm (88 times/minute)
▪ Fluid flow rate in the duct: fluid (water) flow rate = 0.01 m³/s (10 L/minute)
▪ Conveyance speed of conveying means: 7 m/s

Each object to be heated was made by molding flour dough into a block having a length of 65 mm, a width of 17 mm, and a height of 16 mm. These objects to be heated were aligned in 24 lanes in the effective belt conveyor width of 750 mm, and in 20 lines along the travelling direction of the belt, and the microwave heating device was operated under the above conditions to heat the objects. After the heating, the temperatures of the objects to be heated were measured. Since the objects to be heated were moved at 7 mm/s in the cover case (1500 mm), the heating time was about 3 minutes and 34 seconds.

A sheath thermocouple (T Thermocouple, Class 1, JIS C 1605-1995, Chino Corporation) was used as the measurement of the temperature. An infrared-ray thermography device (thermal imaging camera) (NEC San-ei Instruments, Ltd.; Model No.: TH9100 PMVI) was used for the measurement of the temperature distribution of the objects to be heated.

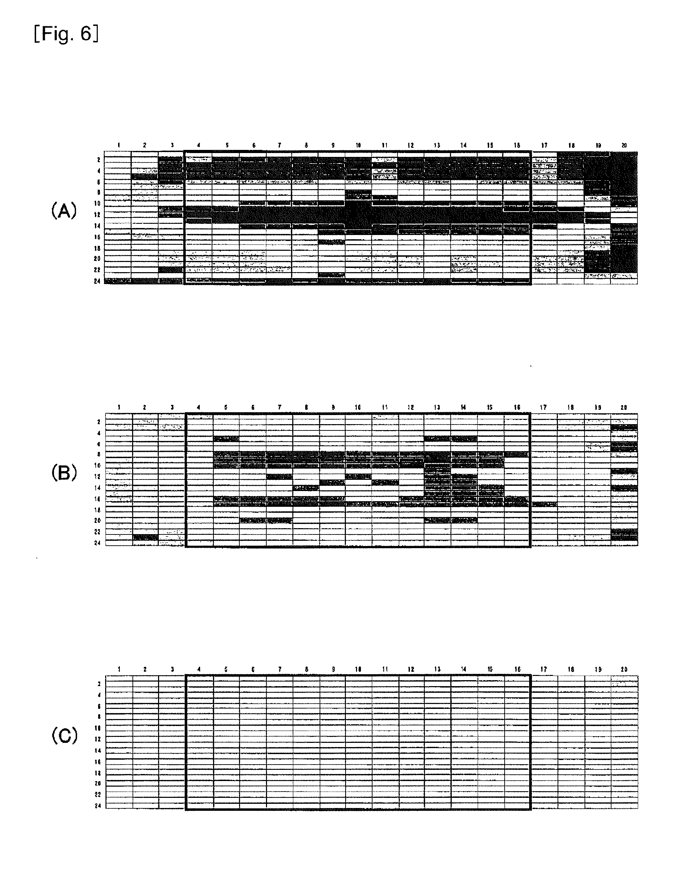

Fig. 6 shows the experiment results. Fig. 6 shows evaluation of the temperature in an area indicated by the thick frame. Each cell corresponds to one of the objects to be heated. As can be seen from the figure, the objects to be heated at the ends of the longitudinal direction (horizontal-wise in Fig. 6) were excluded from the evaluation, so as to appropriately perform the evaluation under the circumstances actually used in manufacturing lines. Further, in Fig. 6, the objects at a low temperature (35°C or less) or at a high temperature (70°C or more) have a deep color. The color becomes lighter as the temperature of the object becomes closer to 50°C.

As shown in Fig. 6(A), in Comparative Example 1, the deep-color objects were observed at the central portion of the width-wise direction and at the ends of the width-wise direction. The central portion of the width-wise direction had the objects at a low temperature (35°C or less), and the ends of the width-wise direction had the objects at a high temperature (70°C or more). This shows that the objects were insufficiently heated in the central portion of the width-wise direction, and that the objects were excessively heated at the ends of the width-wise direction. Further, the temperature difference between the objects having the highest temperature and the objects having the lowest temperature was about 48°C, showing that the temperature greatly varies depending on the position of the object to be heated. More specifically, it was confirmed that, in the device of Comparative Example 1 without the rotating member, the shielding member, and the fluid path, the temperature greatly varies depending on the position of the object to be heated, and that the objects cannot be uniformly heated.

Further, as shown in Fig. 6(B), in Comparative Example 2 in which the arrangement of the microwave generators was changed from Comparative Example 1, although deep-color objects were observed at the central portion of the width-wise direction, the color of the objects in the ends of the width-wise direction were slightly lighter. However, in Comparative Example 2, although most of the objects were heated substantially to 50°C to 60°C, the temperature of the objects in the central portion of the width-wise direction was lower than 40°C. Further, the temperature difference between the objects to be heated having the highest temperature and the objects to be heated having the lowest temperature in Comparative Example 2 was about 27°C. These results confirmed that it was also difficult to uniformly heat the objects in Comparative Example 2 in which the arrangement of the microwave generators was changed from Comparative Example 1, because of the absence of the rotating member, the shielding member, and the fluid path.

In contrast, as shown in Fig. 6(C), the deep-color objects were hardly observed in the present Example. The color depth was almost equalized in the objects. Further, in the present Example, the temperature difference between the objects to be heated having the highest temperature and the objects to be heated having the lowest temperature was only about 10°C. Therefore, it was confirmed that the objects can be uniformly heated by providing the rotating member, the shielding member, and the fluid path.

As shown above, it was confirmed that, by providing the rotating member, the shielding member, and the fluid path, the objects can be uniformly heated even in a microwave heating device having, as a conveying means, a belt conveyor with a metallic belt.

### Example 2

So as to confirm the influence of the width of the slits of the shielding member on the heating condition of the objects to be heated, the width of the slits was varied, and the heating conditions of the objects were compared.

This experiment was performed under the same conditions as those in Example 1, except that the shielding member was changed. The distance from the top panel to the upper surface of the belt was uniformly set to 410 mm. In the shielding member used in this experiment, the widths of the slits were 2 cm, 3 cm (1/4 of the wavelength of the microwave), and 4 cm.

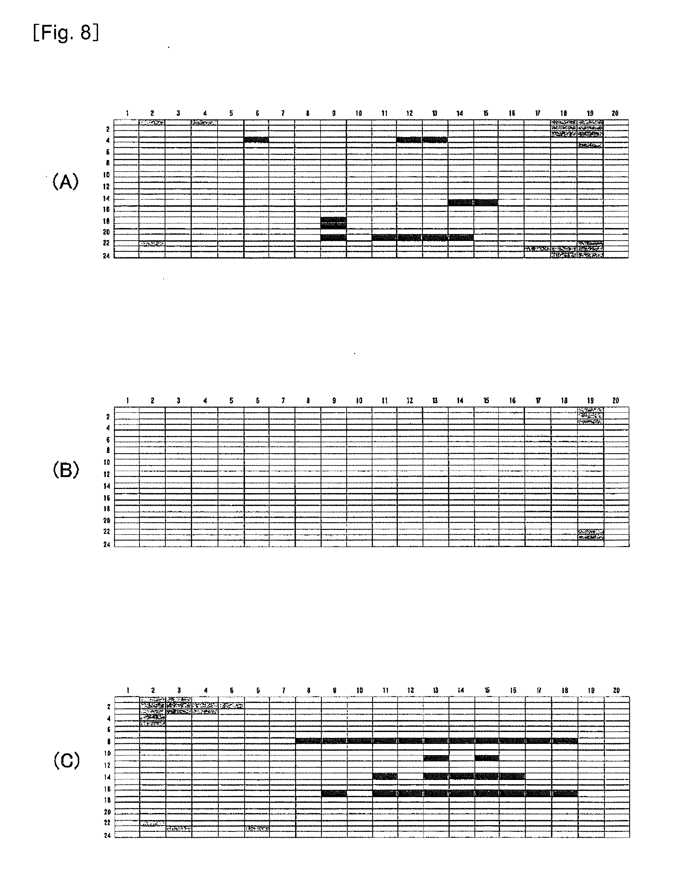

Fig. 8 shows the results. As shown in Fig. 8, it was confirmed that the uniform heating was possible to some extent when the slit width was 2 cm or 4 cm; however, the uniform heating was most satisfactory when the slit width was 3 cm.

These results confirmed that, by providing the rotating member, the shielding member, and the fluid path, the objects can be uniformly heated even when the width of the slits of the shielding member was slightly changed. The results also confirmed that the uniform heating was most satisfactory when the slits had a width of 1/4 of the wavelength of the microwave.

### Example 3

So as to confirm the effect of the fluid path, the heating conditions of the objects to be heated were compared between a device having a fluid path and a device without a fluid path. Further, so as to confirm the influence of the height of the fluid path, the height of the fluid path was varied, and the heating conditions of the objects to be heated were compared.

This experiment was performed under the same conditions as those in Example 1, except for the following conditions. The height of the position of the glass tube designates the distance from the upper ends of the objects to be heated to the upper end of the glass tube. A height of the position was graded positive when it was above the objects to be heated.
(1) A device without a fluid path
   Distance from the top panel to the upper surface of the belt: 500 mm
   Conveyance speed of conveying means: 8 m/s
(2) A device with a fluid path (Case A)
   Distance from the top panel to the upper surface of the belt: 500 mm
   Conveyance speed of conveying means: 8 m/s
   Height of the position of fluid path (glass tube): +50 mm
(3) A device with a fluid path (Case B)
   Distance from the top panel to the upper surface of the belt: 400 mm
   Conveyance speed of conveying means: 7 m/s
   Height of the position of fluid path (glass tube): 0 mm

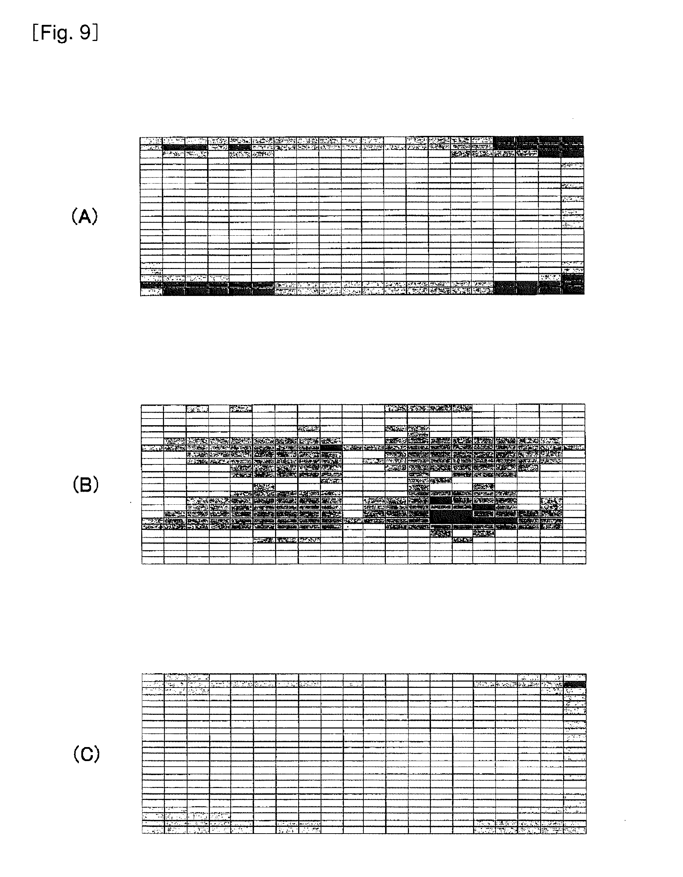

Fig. 9 shows the results. As shown in Fig. 9 (A), in a device without a fluid path, the colors of the objects were slightly deep in the central portion of the width-wise direction and at the ends of the width-wise direction. In contrast, as shown in Fig. 9(B), in Case A using a device with a fluid path, the temperatures of the objects to be heated were generally low, showing that the objects were generally insufficiently heated because of the height of the position of the glass tube, i.e., the height of the position that was significantly higher than the objects to be heated. In contrast, as shown in Fig. 9(C), it was confirmed that, in Case B using a device with a fluid path in which the glass tube was formed at the same height as those of the objects to be heated, the objects were heated substantially uniformly.

These results revealed that the effect of uniformly heating the objects can be improved by providing the fluid path at an appropriate height; and that, however, if the height of the position of the fluid path was not appropriate, the heating condition was even less uniform than that in the divide without a fluid path.

### Industrial Applicability

The microwave heating device of the present invention can be used for the heating or sterilization of food, drying of raw wood, initial heating of rubber, and the like. In particular, the microwave heating device of the present invention is suitable as a preheating device for a facility that first performs preheating, and then performs a treatment at a higher temperature (e.g., baking).

### Reference Numerals

1 Microwave heating device
5 Microwave generating means
10 Conveyor
11 Belt
15 Shielding member
15h Slit
20 Rotating member
22 Rotary vane
31 Duct
m Objects to be heated

## Claims

1. A microwave heating device comprising:
a conveying means for conveying objects to be heated; a microwave generating means for emitting microwaves to the objects to be heated conveyed by the conveying means;
a rotating member that is provided between the objects to be heated and the microwave generating means, and that has a rotary vane configured to reflect the microwaves emitted from the microwave generating means; and
a shielding member configured to reflect the microwaves, provided between the rotating member and the objects to be heated,
the conveying means having a metallic holding member for holding the objects to be heated, the shielding member having a microwave transmitting unit for transmitting the microwaves, the microwave transmitting unit extending in a direction orthogonal to the conveyance direction of the objects to be heated conveyed by the conveying means.

2. The microwave heating device according to claim 1, wherein the shielding member covers the conveying means in the entire region thereof irradiated with the microwaves.

3. The microwave heating device according to claim 1 or 2, wherein the microwave transmitting unit of the shielding member is in the form of slits penetrating through the shielding member, a width of each slit in the conveyance direction of the objects to be heated conveyed by the conveying means is 1/4 of the wavelength of the microwaves.

4. The microwave heating device according to any one of claims 1 to 3, wherein the conveying means is a belt conveyor having a metallic belt for conveying the objects to be heated by placing the objects on the upper surface thereof.

5. The microwave heating device according to any one of claims 1 to 4, wherein:
the microwave heating device further comprises a cover case for covering the conveying means in a portion thereof in which the objects to be heated is being conveyed,
the microwave generating means is configured to supply microwaves to the inside of the cover case,
the shielding member is provided inside the cover case between the microwave generating means and the conveying means,
the cover case has a fluid flow path therein for supplying a liquid flow, the fluid flow path residing in the opposite side of the microwave generating means in relation to the shielding member, and
the fluid flow path is provided between the objects to be heated conveyed by the conveying means and an inner surface of the cover case, along the travelling direction of the objects to be heated conveyed by the conveying means.

6. The microwave heating device according to any one of claims 1 to 5, wherein the fluid flow path is formed from a material that absorbs or transmits the microwaves.

7. A baking facility for baking objects to be baked after preheating the object,
the baking facility comprising:
a conveying means for conveying the objects to be baked;
a preheating device for preheating the objects to be baked, provided in a conveyance path for conveying, by the conveying means, the objects to be baked, and
a baking device for baking the objects to be baked that is preheated by the preheating device, provided in a conveyance path for conveying, by the conveying means, the objects to be baked,
the conveying means having a metallic holding member for holding the objects to be baked, and
the preheating device is the microwave heating device according to any one of claims 1 to 6.

8. The baking facility according to claim 7, wherein the conveying means is a belt conveyor having a metallic belt for conveying the objects to be baked by placing the objects on the upper surface thereof.
